(19) **Europäisches Patentamt**
**European Patent Office**
**Office européen des brevets**

(11) **EP 1 781 907 B1**

(12) **EUROPEAN PATENT SPECIFICATION**

(45) Date of publication and mention
of the grant of the patent:
**29.07.2009 Bulletin 2009/31**

(51) Int Cl.:
*F01N 1/08* (2006.01)   *F01N 1/04* (2006.01)
*F01N 1/10* (2006.01)   *F01N 3/037* (2006.01)

(21) Application number: **05744475.4**

(22) Date of filing: **27.05.2005**

(86) International application number:
**PCT/DK2005/000353**

(87) International publication number:
**WO 2005/116409 (08.12.2005 Gazette 2005/49)**

(54) **COMBINATION SILENCER**

**KOMBINATIONSSCHALLDÄMPFER**

**SILENCIEUX COMBINE**

(84) Designated Contracting States:
**AT BE BG CH CY CZ DE DK EE ES FI FR GB GR
HU IE IS IT LI LT LU MC NL PL PT RO SE SI SK TR**

(30) Priority: **28.05.2004   DK 200400851**

(43) Date of publication of application:
**09.05.2007   Bulletin 2007/19**

(73) Proprietor: **Silentor Holding A/S
2640 Hedehusene (DK)**

(72) Inventors:
• **FREDERIKSEN, Svend
DK-2840 Holte (DK)**
• **VALBJØRN, Peter
DK-4040 Jyllinge (DK)**
• **MORTENSEN, Preben, Korntved
DK-9850 Hirtshals (DK)**

(74) Representative: **Plougmann & Vingtoft A/S
Sundkrogsgade 9
P.O. Box 831
2100 Copenhagen Ø (DK)**

(56) References cited:
EP-A- 0 127 550          WO-A-01/53665
WO-A-01/71169          WO-A-99/50539
GB-A- 732 936          US-A- 4 074 975
US-A1- 2002 096 385

## Description

FIELD OF THE INVENTION

The invention relates to a silencer with an outer shell which is provided with one or more inlet conduits for leading a gas into the silencer and with one or more outlet conduits for leading the gas from the silencer. The invention also relates to such a specific silencer designed so as to provide means intended for acting as a spark-arrestor. Furthermore, the invention relates to a combustion engine provided with a silencer according to the invention.

BACKGROUND OF THE INVENTION

Reactive silencers for gas flows comprise one or more through-flowed chambers. It is known in the art of silencer design to supplement such silencers in various ways to improve a generally broad-banded noise reduction spectrum at various frequencies. Such improvement is, e.g., warranted because the un-silenced noise spectrum exhibits a peak at one or more frequencies, or because the silencer would otherwise exhibit dips in the attenuation spectrum, typically because of harmful resonance waves set up in chambers or passages of the silencer.

A general feature of such supplementary methods relies on the use of various types of elements which are essentially not through-flowed.

In the following, the expression "terminated cavity" will be used in the meaning of a cavity which is not through-flowed.

One such method of supplementing a silencer consists of fitting elements containing a sound absorptive material into the silencer, such as mineral wool. Such elements will supplement silencing in a wide frequency range roughly above a certain lower limit frequency, which can be determined by analyzing standing waves set up within cavities containing the absorptive material.

A further aspect of methods of supplementary silencing relies on the use of various types of resonators providing added noise attenuation at one or more selected frequencies. One type of such resonators is the Helmholtz resonator, which is connected to a through-flowed passage or chamber via a neck section, which is in turn connected to a terminated cavity. The peak attenuation frequency of such a Helmholtz resonator may be approximately calculated by a mass-spring analogy. The mass-spring analogy considers the mass of gas present by the neck as a stiff, concentrated mass. The flexibility of the terminated cavity and the flexibility of a cavity on the opposite side of the neck are considered as springs, each spring being connected at one end to the mass and at the other end to a steady wall. If the last-mentioned cavity is much bigger than the terminated cavity, it will act as a relatively much softer spring whose stiffness may be omitted in a rough calculation of the peak attenuation frequency.

A third supplementary silencing element is the side-branch resonator with a closed-end pipe in which standing waves are set up to absorb sound at corresponding noise frequencies. Such a resonator will provide added noise reduction at frequencies corresponding to 0.25, 0.75, 1.25, etc. waves set up in the pipe. The frequency corresponding to 0.25 wave length will be the lowest (and usually the most prominent) one.

It is further known to design silencers in various ways so as to act as spark arrestors, i.e. to prevent any significant amount of glowing particles (sparks) from passing the silencer, thereby reducing the risk of causing harm to human beings or causing fire or explosion in case of any inflammable substances being situated close to the exhaust.

It is easy to fit a screen or some other particle-obstructing means into a silencer, but commonly known means of this kind generally significantly augment the pressure drop across the silencer. There is a need in the market for a silencer which can produce a significant, not necessarily a maximum, spark arresting effect with a low or a very low additional pressure drop across the silencer.

Various known silencer designs have been disclosed, amongst others:

WO 99/50539 discloses a silencer comprising at least one acoustic chamber through-flowed by gas, e.g., exhaust gas, at least one inlet pipe and at least one pipe or passage interconnecting two chambers or a chamber and an exterior environment or chamber and is designed with such cross-sectional area transitions between passages and the chambers that sound attenuation achieved by the device is high while the pressure drop across the silencer is low and that high attenuation at low characteristic frequencies of flow systems comprising the device are obtained. One or more diffusers and/or monolithic bodies or catalysts may be comprised in the device. The passages may be curved or helical so as to allow for a low natural frequency.

WO 01/53665 discloses an exhaust gas treatment device for exhaust gas system capable of reducing and removing unburned gases, incompletely burned gases, soot and smoke, and oil content contained in the exhaust gases from an internal combustion engine, increasing the output efficiently as well as the fuel consumption efficiency of the internal combustion engine, providing an effect of remarkably eliminating the noise of the exhaust gases from the internal combustion engine, remarkably reducing a rise of a back pressure, and minimizing the lowering of the combusting efficiency and engine output and having structures in a treatment chamber disposed in an exhaust gas system, comprising at least an exhaust gas advancing part allowing the exhaust gases from the internal combustion engine to be led and at least one or more treatment chambers and an exhaust gas delivery part where the structures are installed; the structures being allowed to be movable structures and fixed structures, the movable structures including, specifically, a propeller type impeller, wheel type impeller, rotating drum, oscillating plate, rotating top, rotating plate, butterfly, slider, and rotating worm, the fixed structures including a metal plate, porous metal plate, metal plate with projection, flow straightening plate, top, and wall.

EP 0 127 550 discloses a silencer for a compressed air installation of the type including baffles prolongating the path of travel of the flux of air with at least one portion of the chamber of the chamber defined by a perforated wall maintaining a filling of absorbing material, the baffles being formed with orifices separating the global flux of air into elementary streams of reduced section, the orifices and the baffles being placed such that the streams collide against the wall of at least some of the adjacent baffles and/or against each other and are brought in contact with said perforated wall maintaining the filling of absorbing material, **characterized in that** it includes means providing for a return of said streams of air along path of travel portions which are substantially parallel but in an opposite direction with respect to the general circulation direction, the circulation in contact with the perforated wall being effected according to a total path of travel which is close to the length of the silencer.

GB 732 936 discloses In a combined silencer and centrifugal separator comprising a vortex chamber having a cross-section in the form of a polygon, the inlet duct and inlet opening 2 are so arranged that the gas enters the chamber tangentially to the in-circle of the polygon. The cleaned gas leaves the vortex chamber and passes downwardly through an expansion chamber having annular baffles to discharge through an orifice 10 the effective area of which is controlled by moving a plate. The separated dust or liquid collects at the bottom of the vortex chamber and is discharged through an outlet. The walls of the vortex chamber are lined with sound-absorbing panels.

Although many silencers of known designs, even though not having been designed for such a purpose, will in fact have some spark-arresting effect, a gas flow containing particles, such as exhaust from a diesel engine, may gradually compromise a silencer in its acoustic function. One important reason for this is that perforations in the walls of such a silencer, allowing noise to be transmitted into sound absorptive material, may in the course of time become clogged, causing the desired sound absorptive effect to become gradually obstructed.

SHORT DESCRIPTION OF THE INVENTION

It may be an object of the invention to provide a silencer of the reactive type with a resonator and having increased noise attenuation within confined dimensional restraints. It may also be an object of the invention to provide a silencer which is based on already applied techniques and which may be redesigned easily and cheaply.

These objects and possible other objects are obtained by a silencer according to claim 1 in with

- an outer shell and provided with one or more pipes for leading gas flow into the silencer and with one or more outlets for leading gas from the silencer, the silencer comprising

- at least one chamber capable of being trough-flowed by gas entering the chamber and at least one perforated conduit section adjacent to which is provided sound absorptive material, and

- said sound absorptive material, in order to constitute a closed absorptive material containing cavity, except for said perforations, and said conduit section together constituting a protrusion extending from part of said outer shell, such as an end cap, or from an internal member, such as a baffle, said internal member causing separation of two through-flowed chambers of the silencer,

- said sound absorptive material being arranged adjacent to and surrounding at least one terminated cavity, or said sound absorptive material being arranged adjacent to and being surrounded by at least one terminated cavity, and where a cylindrical shell is provided between the sound absorptive material and the terminated cavity,

- said at least one terminated cavity being acoustically in communication with said at least one through-flowed chamber, and said acoustic communication being either direct or via a neck section provided between the at least one terminated cavity and the at least one through-flowed chamber, and

- said at least one terminated cavity being arranged adjacent to said sound absorptive material, thereby constituting one or more resonators acoustically communicating with said at least one through-flowed chamber.

The invention combines, in a basically reactive type silencer, the above-mentioned absorptive type of element with either a Helmholtz resonator or with a side-branch resonator in a way which is particularly compact and cheap to manufacture. In several preferred embodiments of the invention, an annular cavity which surrounds the absorptive element is utilised as a resonator to absorb energy at one or more selected noise frequencies. By means of further, simple design features, these noise frequencies can be selected rather freely, as will be shown and explained below.

In order for the at least one through-flowed chamber to truly act to reflect sound waves at the inlet passages to and the outlet passages from the chamber, and for the chamber to function to reduce noise efficiently from a not too high lower cut-off frequency, it is desirable that the cross-sectional area ratios of the passages in respect to the chamber cross-sectional area, and the outlet passages in respect to the chamber are not too big.

It is also desirable that the chamber is of a not too small volume. These objects may be obtained by said at least one through-flowed chamber provided with one or more inlet passages for leading gas to said chamber, and being provided with one or more outlet passages for leading gas from said chamber, and where the sum $a_{in}$ of acoustically representative cross-sectional areas of said Inlet passages is fulfilling the condition $a_{in} < A/3C$, and/or where the sum $a_{out}$ of acoustically representative cross-sectional areas of said outlet passages is fulfilling the condition $a_{out} < A/3C$, and/or where the volume V of said chamber is fulfilling the condition

$$V > 6C \left( \sqrt{((a_{in} + a_{out})/2)} \right)^3,$$ A being an acoustically representative cross-sectional area of said chamber and C being a constant at least taking the value C=1. In alternative embodiments, the constant C may take the value C=2 or C=3.

According to one possible embodiment of the invention, said at least one terminated cavity is of a longitudinal shape along a longitudinal extension of the silencer, said cavity thereby acting as a resonator attenuating noise at frequencies corresponding to standing waves in the longitudinal direction of the cavity, the lowest of said frequencies corresponding to a standing quarter-wave. This feature presents the advantage that the silencer is tuned to specific frequencies, thus obtaining maximum noise attenuation in the number of terminated cavities. Furthermore, any one and selected wavelength of the frequency may be used for designing the length of the terminated cavity, but still making it possible to maintain the noise-attenuating properties of the remaining elements of the silencer, and not necessarily demanding a re-design of these elements because of a chosen length of the terminated cavity. Thus, the individual design features may be selected and designed rather freely and not necessarily dependent on possible mutual relationships.

As will be demonstrated, such cavities of a longitudinal shape can be accommodated in remarkably simple and compact designs, making the silencer cheap to manufacture. Furthermore, the silencer is well-suited for augmenting the noise reduction effect of the silencer at one or more particular noise frequencies in situations where noise reduction would be insufficient if one were to rely solely on noise reduction caused by noise-reducing effects caused by a combination of the reactive/reflective effect of through-flowed chambers and the noise absorptive effect achieved by means of sound absorptive material.

According to another possible embodiment of the invention, the terminated cavity communicates acoustically with the at least one through-flowed chamber, either directly or via a neck section provided between the at least one terminated cavity and the chamber intended for being through-flowed by gas. This feature has the general advantage of achieving additional noise-reducing effects at one or more target frequencies by simple designs. In the case of a silencer with several through-flowed chambers, it will for instance be possible to design the noise reduction characteristic of the silencer within wide limits, without resorting to complicated and costly designs.

Depending on the specific design of the silencer, on the possible dimensional restraints and on the intended and/or demanded noise-attenuating properties, the acoustically effective length, L, of said terminated cavity is essentially equal to, smaller than, or longer than a length of said protruding sound absorptive material seen along the longitudinal extension of the silencer.

When a terminated cavity is used as a side-branch resonator, it should be of a longitudinal shape in order to achieve a distinct resonance effect in the longitudinal direction. This may be achieved by ensuring that a mean distance between walls in radial direction, integrated over the entire longitudinal and circumferential extension of the acoustically effective length of the terminated cavity, is at the most a ratio 1/3 of said acoustically effective length. Alternatively, the mean distance may be at the most a ratio 1/5 of said acoustically effective length. As a further alternative, the mean distance may be at the most a ratio 1/10 of said acoustically effective length.

When a terminated cavity is of a more complex shape, the longitudinality of the cavity can be quantified by referring to a volume V of the cavity and to summed surfaces S of side walls of the cavity. In such a case, the acoustically effective length L of said at least one terminated cavity is at least 6 times the ratio V/S between the volume of said cavity and the summed surface areas of the side walls of said terminated cavity. Alternatively, the acoustically effective length L of said at least one terminated cavity is at least 10 times the ratio V/S. As a further alternative, said acoustically effective length L of said at least one terminated cavity is at least 20 times said ratio V/S.

The shape of said cavity may at least partly constitute a helical winding around said protruding sound absorptive material. A helical winding entails the advantage that the acoustically effective length may be longer than a length of said protruding sound absorptive material seen along the longitudinal extension of the silencer, however, without taking up as much dimensional space seen in either an axial or a radial direction in comparison with the actual acoustically effective length obtained by a helical winding.

If the silencer is provided with at the least one neck section acoustically connecting said at least one terminated cavity with said at least one through-flowed chamber, the neck section may be designed for creating a Helmholtz-type resonator. Thereby it is possible to obtain a very pronounced additional noise reduction effect at a frequency which can be selected within a very broad range of frequencies. For instance, it becomes possible to extend the noise reduction spectrum down to very low frequencies, which may otherwise be difficult to attenuate with a silencer to be accommodated within a limit space restriction, i.e. if the silencer has to be compact.

Furthermore, the at least one protruding sound absorptive material and the at least one essentially surrounding terminated cavity may be of a substantially circular-cylindrical configuration. This is an example as to how the invention makes it possible to accommodate three, mutually supplementing noise reduction effects in a particularly simple design. Those three effects are, noise reduction by: 1) sound reflection at cross-sectional changes at inlets and outlets of through-flowed chambers, 2) sound absorption in sound absorptive material, and 3) resonance sound absorption, either by a longish quarter-wave sound absorber, or by a Helmholtz sound absorber, all those types having been described above. A possible embodiment of a silencer comprises at least two terminated cavities, the one terminated cavity having an acoustically effective length L1 and the at least one other terminated cavity having an acoustically effective length L2, and where said length L1 is different form said length L2. This is a demonstration of a rather simple way of designing the noise reduction characteristics of a silencer according to the invention. If more than two lengths are selected, a more sophisticated design of the noise reduction characteristics can be attained. One may target very different frequencies in some cases. In other cases, two or more targeted frequencies may differ only slightly, whereby the rather narrow-banded sound absorptive effect of a single resonator can be extended in terms of frequency range effect of the sound absorptive effect.

In order to design the outer shape of a big silencer, for instance the silencer of a big diesel engine serving the electricity needs of an island, in which the allowable length of the silencer is limited, but where it is possible design for a certain width and a certain height of a horizontally disposed silencer, at least three pieces of said protruding sound absorptive material are arranged to establish at least three parallel gas flows inside said protruding sound absorptive material, and the at least one terminated cavity is constituted by a spacing between said protruding sound absorptive material.

This cavity may be a residual cavity found between the three or more protrusions. The cross-sectional shape of this residual cavity may appear complicated, but since it is a residual cavity, it can be accommodated by a very simple design, as will be demonstrated below. If the residual cavity is used as a quarter-wave resonator, it should be of a rather longish shape, which can be obtained simply by designing the protrusions to be of a certain minimum length and by accommodating the protrusions close to each other, so that the mean transverse direction between the protrusions becomes rather small.

If at least three protruding pieces of sound absorptive material are provided, more of said cavities are formed by sub-dividing said spacing, possibly by sub-dividing said spacing by establishing insertions of one or more walls between said protruding sound absorptive material. The sub-division of the spacing may be established by inserting one or more walls between the protruding sound absorptive material and another member of the silencer, e.g. the outer shell of the silencer. The sub-division can be used for having different lengths of different quarter-wave resonators. Walls for subdivision may nevertheless be necessary to provide sufficient stiffness to the assembly of protrusions.

At least one resonator of the silencer is constituted by at least one terminated cavity at least partly surrounding the protruding sound absorptive material, tuned so as to target a peak frequency of an un-attenuated noise spectrum to be attenuated by the silencer.

According to an aspect of the invention, the silencer is designed so as to provide means intended for acting as a spark-arrestor, said means comprising the at least one terminated cavity capable of collecting particles separated from the gas flow as the spark-arresting function. Preferably, at least one of the following flow motions; radial outward flow motion, radial inward flow motion and swirling flow motion, is enforced upon the gas flow passing through the silencer, thereby promoting particles contained in the gas flow to be collected in the at least one terminated cavity designed as a spark-arrestor.

Spark-arresting function is commonly called for in exhaust systems, especially exhaust systems of diesel engines, where the exhaust will contain particles of various sizes. Such particles will tend to clog any perforations in communication with the sound absorptive material, especially in cases where the perforations are not continuously being swept by a gas flow. Such clogging can gradually compromise the sound absorptive function of the sound absorptive material. Larger particles may be glowing for a long time after having been exhausted form the engine as such, and if such glowing particles are transmitted to the environment, they may cause harm such as fires or even explosions. Thus, according to another aspect, the invention also relates to a combustion engine provided with a silencer according to the invention, said combustion engine preferably being a diesel engine.

It will be demonstrated below how the invention makes it possible to attain a significant spark-arresting effect without resorting to design elements that would cause a significant increase of pressure drop across the silencer.

It will also be demonstrated how the invention can be adapted to contain instead one or more screens inside a silencer in a way that provides an enhanced spark arresting function in such a way that there will be less accumulation of soot or other particles onto such screens, compared to prior art silencers providing spark arresting by means of screens.

DETAILED DESCRIPTION OF THE INVENTION

In the following, the invention will be described in more detail by reference to the figures where:

Fig. 1 shows a longitudinal cross-section of a first embodiment of the invention,

Fig. 2 shows a longitudinal cross-section of a second embodiment of the invention,

Fig. 3a shows a longitudinal cross-section of a third embodiment of the invention,

Fig. 3b shows a transverse cross-section of the third embodiment of the invention,

Fig. 4 shows a longitudinal cross-section of a fourth embodiment of the invention,

Fig. 5 shows a longitudinal cross-section of a fifth embodiment of the invention,

Fig. 6a shows a longitudinal cross-section of a sixth embodiment of the invention,

Fig. 6b shows a transverse cross-section of the sixth embodiment of the invention,

Fig. 7a and 7b show cross-sections of a seventh embodiment of the invention and

Figs. 8a and 8b show cross-sections of an eighth embodiment of the invention.

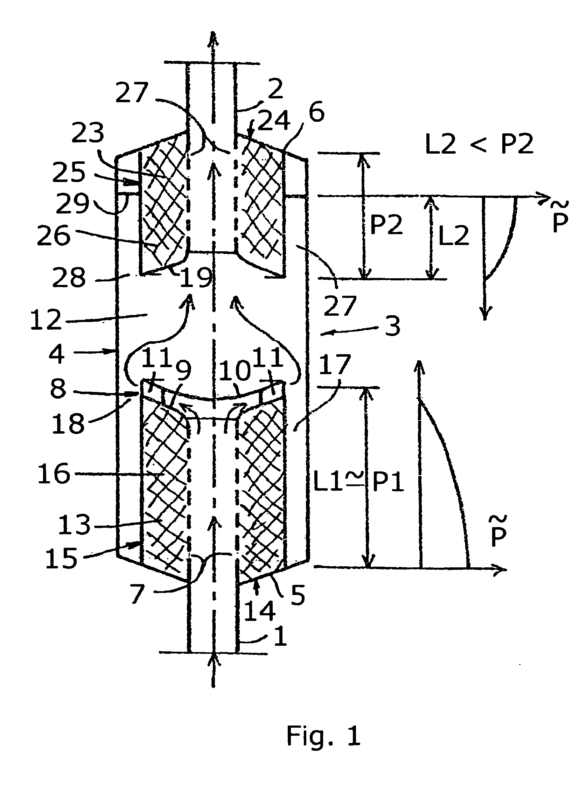

Fig. 1 shows a longitudinal cross-section of a first, essentially circular-cylindrical embodiment of a silencer according to the invention. The silencer has at least one casing 3. A first pipe 1 is leading a gas flow into the silencer, and a second pipe 2 is leading gas from the silencer. The casing 3 is composed of a cylinder 4 fitted with a conical end cap 5,6 at each end of the silencer. The end caps 5,6 may have other shapes such as plane or spherical, and the end caps may also have individually different shapes. The first pipe extends into the silencer at least partly along a perforated pipe section 7 leading up to a radial diffuser 8, composed of two circular-symmetrical baffles 9,10 held together by radially extending ribs 11. In the shown cross-section, two such ribs 11 are shown to fall within the sectional plane. Typically, further ribs will be provided, e.g. in total eight ribs positioned with intersecting angles of 45 degrees. From the diffuser 8, gas continues to flow inside a through-flowed chamber 12.

From a position 14 in the immediate vicinity of the end cap 5, alternatively at a position more or less remote from the end cap 5, the perforated pipe section 7 is surrounded by sound absorptive material 13 contained between the pipe and a cylindrical shell 15. The whole assembly of pipe section 7, sound absorptive material 13, cylinder 4 and radial diffuser 8 all together provide a protrusion 16 from the end cap 5 at the first pipe 1 into the silencer interior. The protrusion 16 may also be constituted only by at least the pipe section 7 and the sound absorptive material 13, thus omitting either the cylinder 4 or the radial diffuser 8, or omitting both the cylinder 4 and the radial diffuser 8. The protrusion 16 is surrounded by an annular spacing, providing a terminated cavity 17 between the cylindrical shell 15 and the outer casing 3 of the silencer.

The terminated cavity 17 acts as a side-branch resonator acoustically communicating with the through-flowed chamber 12 through an opening 18. Inside the resonator, during operation of the silencer, standing waves are set up, said standing waves having the effect of absorbing sound energy from the through-flowed chamber 12 at corresponding frequencies. The lowest of these frequencies is the one whose quarter-wave pressure amplitude p variation from the closed end of the terminated cavity 17 to the opening 18 is shown adjacent to the silencer. In the embodiment shown, the resonator length L1 is essentially the same as the length P1 of the protrusion 16.

The second pipe 2 extends backwards into the silencer by a perforated pipe section 27 which is surrounded by sound absorptive material 23 extending from a position 24 in the immediate vicinity of the end cap 6, alternatively at a position more or less remote from the end cap 6. The sound absorptive material 23 is surrounded by a cylindrical shell 25. Smooth gas flow from the through-flowed chamber 12 into the second pipe 2 is provided for by means of a conical baffle 19, which together with the cylindrical shell 25 acoustically closes off the sound absorptive material 23 against the through-flowed chamber 12. Between the cylindrical shell 25 and the cylindrical silencer casing 4, a terminated cavity 27 is formed, which is an annularly shaped side-branch, communicating acoustically with the through-flowed chamber 12 via an opening 28.

The perforated pipe section 27, the sound absorptive material 23, the cylindrical shell 25, and a conical baffle 19 together constitute a backward protrusion 26 into the silencer. The length L2 of the terminated cavity 27 has been made shorter than the length P2 of the backward protrusion 26 by insertion of an annular baffle 29 between the cylindrical shell 25 and the cylindrical casing 4 of the silencer.

This feature has the effect of shortening the length of the quarter-wave, as can be seen from the small diagram of pressure amplitude, shown adjacent to the silencer. Corresponding to the shortened quarter-wave is a higher peak frequency of sound absorption associated with the resonator, for which it could be desirable to target a certain peak in the un-attenuated noise frequency spectrum, or a dip in the attenuation spectrum of a corresponding silencer without the annular baffle 29.

Summing up, fig. 1 is an example of a silencer comprising two terminated cavities 17,27, whose acoustically effective lengths can be adapted to achieve sound absorption, peaking at two different sound frequencies. Naturally, the one peaking sound frequency associated with the one terminated cavity 17 could be increased by inserting an element like the annular baffle 29 in this cavity as well.

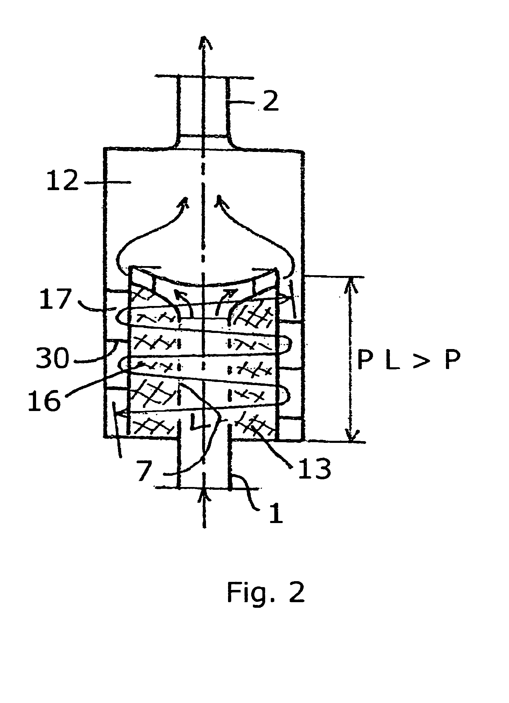

Fig. 2 shows a second embodiment of the invention in which the acoustically effective length L of a terminated cavity 17 has been made significantly longer than a length P of a protrusion 16 into the silencer. This has been achieved by fitting a helically extending, annular wall 30 inside the terminated cavity 17. This feature creates a significant lowering of standing-wave frequencies, starting with the quarter-wave.

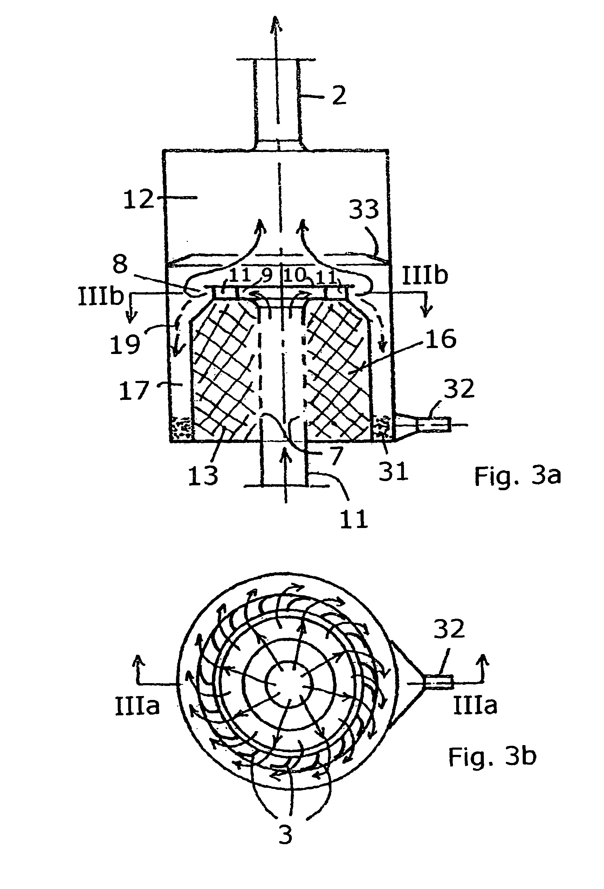

Figs. 3a and 3b show a third embodiment of the invention. In addition to noise reduction, this silencer has been designed to act as a spark-arrestor in which particles 31 are collected at the bottom of an annular, terminated cavity 17. The particles accumulating at the bottom of the terminated cavity 17 can be sucked out of the cavity 17 via a suction pipe 32. A radial diffuser 8 has been fitted with bending ribs 11 as can be seen from fig. 3b. These bending ribs 11 will cause the radial flow between the baffles 9 and 10 to bend inside the diffuser 8 to leave the diffuser 8 with a tangential component, imparting a centrifugal force on the gas and on particles contained in the gas.

Thereby, especially larger particles, e.g. those whose glow is potentially the most harmful to the environment if not retained, are forced towards the inner side of the silencer casing, from which the particles, due to gravity, will fall downwards to be collected at the bottom of the cavity as indicated by dotted arrows in fig. 3a. The baffle 9 is shown to be tapered at its periphery, facilitating a 180 degree turning of flow direction of particles. Full arrows show paths of gas flow and of small particles following the gas flow. A conical baffle 33 extending inwardly into the through-flowed chamber 12 assists in separating bigger particles from the gas flow through the silencer, at the same time being shaped so as not to create too great a flow-restriction on gas flow.

It is to be noted that the radial diffuser 8, as indicated in fig. 3a, has been designed to cause the gas to flow in an outward, perpendicular direction to the longitudinal axis of the pipe section 1 and the to the whole silencer. This differs from flow conditions in the (also radial) diffuser shown in fig. 1, in which the radial flow between baffles 9 and 10 has a small axial component. I.e. in the embodiment shown in fig. 1 the change of direction of flow from the incoming axial direction in the first pipe 1 is somewhat smaller. A design as shown in fig. 1 tends to improve the degree of pressure recovery in the diffuser. The 90 degree change of flow direction in the diffuser 8 shown in fig. 3a instead represents some sacrifice of pressure recovery for the benefit of more efficient particle separation.

For a given distance between baffles 9 and 10 in the embodiment shown in fig. 3a, the tangential component of flow exiting the diffuser 8 increases the dynamic pressure of flow leaving the diffuser. Since this dynamic pressure is virtually dissipated inside the through-flowed chamber 12, the tangential flow component tends to decrease the pressure recovery in the diffuser. This could be compensated for by increasing the distance between the baffles, but would simultaneously cause a less efficient separation of particles. Thus, there is a trade-off between pressure recovery and efficiency of particle separation. When a maximum of particle separation is the objective, the diffuser may be designed with such a big absolute velocity of flow leaving the diffuser that there is a positive pressure drop across the diffuser 8 (no net pressure recovery).

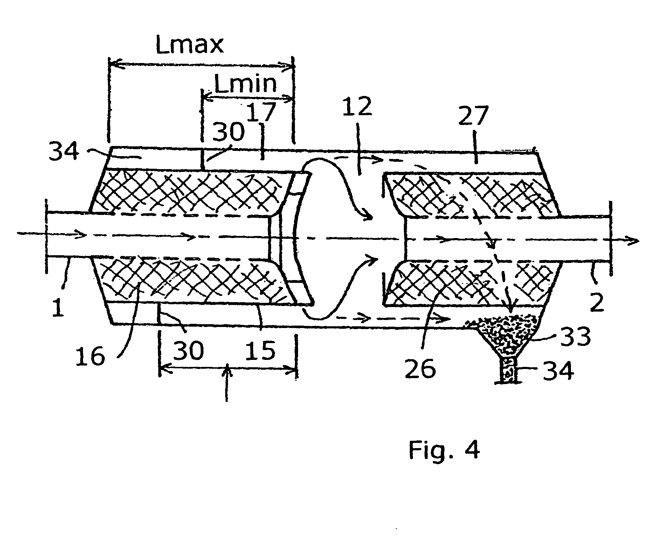

Fig. 4 shows a fourth embodiment of the invention, featuring both another spark-arresting arrangement and a not previously shown feature of a terminated cavity acting as a side-branch resonator.

In fig. 3a, the terminated cavity 17 in which particles are retained surrounds the protrusion comprising the diffuser 8 causing flow to change direction. By contrast, in fig. 4, where there are first and second terminated cavities 17 and 27, particles are collected in the second cavity 27 which does not surround the first protrusion comprising diffuser 8. Such an arrangement facilitates an overall design for low pressure drop across the silencer, still causing a particle separation effect, since the radial diffuser forces the flow to bend twice. Bigger particles, due to their inertia, will tend to be caught by the second cavity 27, in which they are collected at the bottom, noticing that in fig. 4 the silencer has been arranged horizontally. Two dotted lines indicate flow paths of bigger particles. Some particles enter the upper part of the second cavity 27 and thereafter follow a course of turning around the symmetry axis of the annular cavity. The corresponding curved, dotted line is a projection of the three-dimensional particle flow path in the longitudinal section shown on the drawing.

It should be noted that, although as mentioned, the flow through the silencer has been forced to follow rather abrupt changes of flow direction, there will not be any big pressure drop across the silencer. One important reason for this can be found in the use of the radial diffuser, which can be designed for a negative pressure (i.e. a pressure recovery) across this particular design element. Also, collecting the particles in the second cavity 27 is associated with a minimal pressure loss, since the flow, when forced inwardly from the outer shell has a rather low flow velocity.

The second feature illustrated in fig. 4 is a continuous, angular variation of the length L of the first terminated cavity 17 between a minimum length Lmin and a maximum length Lmax. A helically extending annular wall 30 extending 360 degrees round causes this angular variation of L. A plane, longitudinally extending member 34 positioned in the upper-left part of the annular spacing between cylinder 15 and the cylindrical silencer casing 3 connects the two ends of the annular wall 30 and closes off the resonator towards the residual, annular spacing to the left of the annular wall 30.

This variation of length L increases the bandwidth of attenuation, caused by the side-branch, at the expense of a lowered peak attenuation. Such increase of band-width may be desirable if the frequency in which added attenuation is needed is not known exactly and/or if it varies, e.g. due to varying speed of an engine.

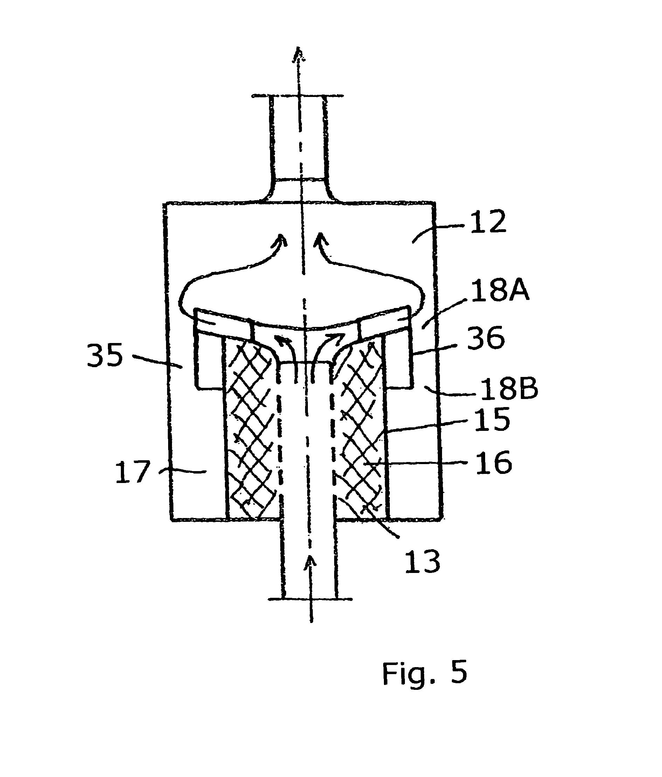

Fig. 5 shows a fifth embodiment according to the invention. Here, a Helmholtz resonator surrounds a protrusion 16 extending into the interior of the silencer, and comprising sound absorptive material 13 as in all the previously shown embodiments. The Helmholtz resonator consists of a resonator volume provided by a terminated annular cavity 17 and a similar annular neck section 35, which communicates acoustically, both with the through-flowed chamber 12 at the opening 18A and with the terminated cavity 17 at the opening 18B. The neck section 35 is created by adding a short cylinder 36 whose diameter is larger than that of the cylinder 15. As previously mentioned, the Helmholtz resonator allows for frequency-targeted noise reduction within a particularly broad range of frequencies to be selected as target frequency.

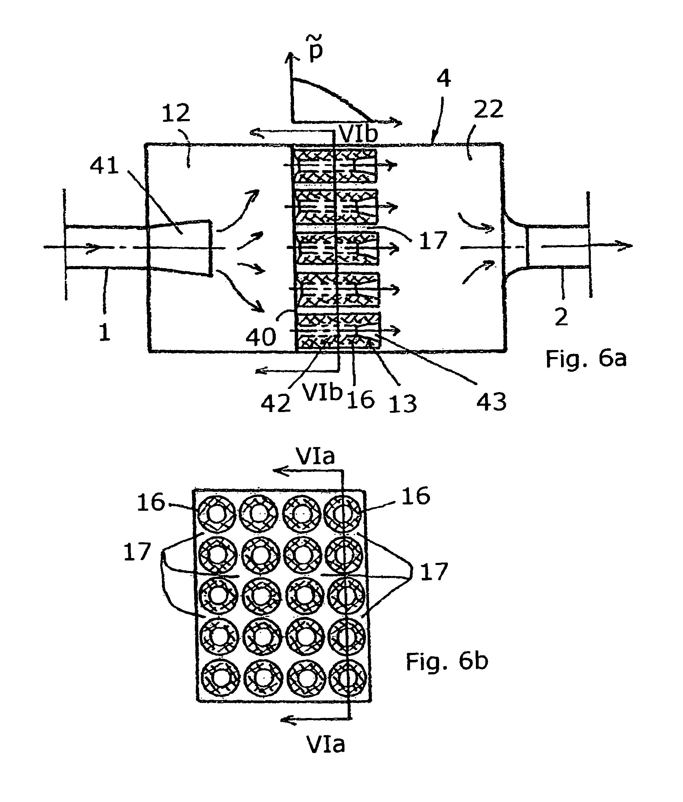

Figs. 6a and 6b show a sixth embodiment of the invention, being a silencer with a first and a second through-flowed chamber 12 and 22, separated by a baffle wall 40. Gas flow is led into a first through-flowed chamber 12 via a first, conical diffuser 41. The connection between the two chambers is made of in total twenty small absorptive silencers, each providing a protrusion from the baffle wall towards a second through-flowed chamber 22. Each small silencer is made of a perforated pipe 42 ending in a small, conical diffuser 43. Between the protrusions and the inner side walls of the silencer casing 4 a residual spacing is created, constituting a terminated cavity assembly 17, which acts as a collective side-branch resonator, as illustrated by the quarter-wave pressure diagram in fig. 6a. Unlike the previous embodiments, the silencer casing 4 is rectangular, and not circular. This last embodiment will typically be used when bigger silencers are called for.

In fig. 6, since the protrusions are positioned slightly apart, the terminated cavity 17 is essentially a single cavity. By moving the protrusions to be in contact with each other, or by inserting division walls, several or even many smaller cavities 17 could be created instead. Further, by insertion of walls analogous to annular baffle 29 of the embodiments shown in figs. 1 and 3, two or more resonators for differing resonator frequencies could be created. A similar effect could be achieved by varying the lengths of differing protrusions in the embodiment shown in fig. 6.

Quarter-waves are most prominently set up in side-branch resonators when such resonators are pipes or function as pipes by being of a longitudinal, rather narrow shape, to create a rather distinct resonance in the longitudinal direction. Thus, in the embodiments shown in figs. 1-4, all annular or helically extending cavities are significantly longer than the width of their annular gaps. Also, in fig. 6, the terminated cavity 17 will act as a longitudinal quarter-wave resonator. In cases like the last-mentioned, in which the cavity is of a complex shape, longitudinality can be defined as prescribing that the length L of the cavity should be at least a certain multiplication factor, such as 10 or 20, times the ratio V/S between a volume V of the cavity, and the (summed) surface(s) of the sidewall(s) of the cavity or cavities.

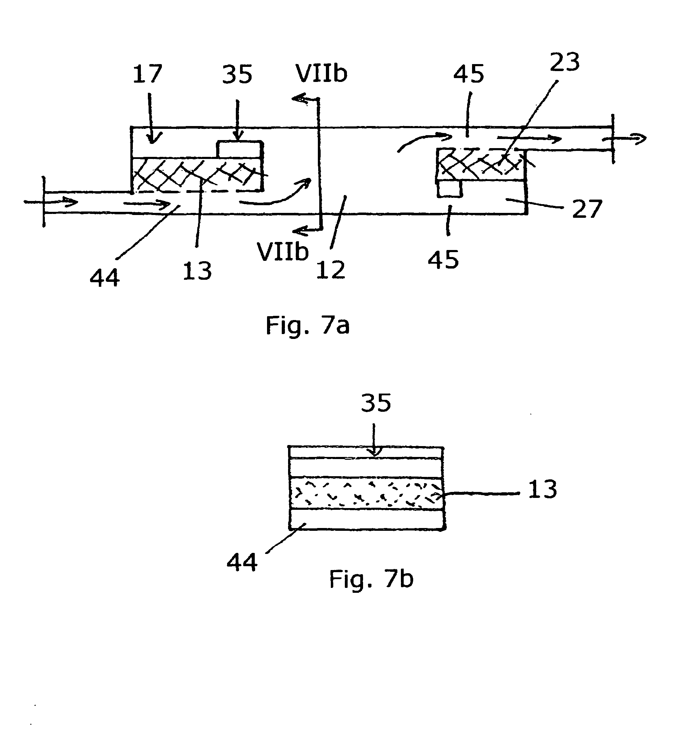

In all previously shown embodiments, the perforated pipes and the protruding sound absorptive material have been shown to be circular-cylindrical, and the sound absorptive material as well as the terminated cavities have been shown to surround the perforated pipes. Fig. 7a and 7b in contrast show a seventh embodiment with a rectangular-shaped silencer in which there are perforated conduits 44,45 of a rectangular cross-sectional shape. The sound absorptive material is contained within adjacent cavities on the side of which material terminated cavities 17 and 27 have been arranged. In the embodiment shown, due to the neck sections 35,45, the cavities are providing parts of Helmholtz resonators.

In all the embodiments shown, the silencers are shown to be designed with a simple outer casing. It should be understood that acoustical and spark-arresting effects similar to those demonstrated in the embodiments may also be achieved with more complicated designed silencer casings. For the sake of heat insulation, it may e.g. be preferable to design the casing as a double-wall design or multiple-wall design, possibly with heat-insulating material in spacings between the walls.

Further, in all the embodiments, sound absorptive material 13,23 is shown to surround perforations 7,27 of pipes in immediate vicinity of the pipes. In order to minimize the amount of sound absorptive material drawn out into the pipe at large gas velocities, protective open-structured (not preventing sound propagation) intermediate layers may separate the perforations 7,27 and the sound absorptive material 13,23.

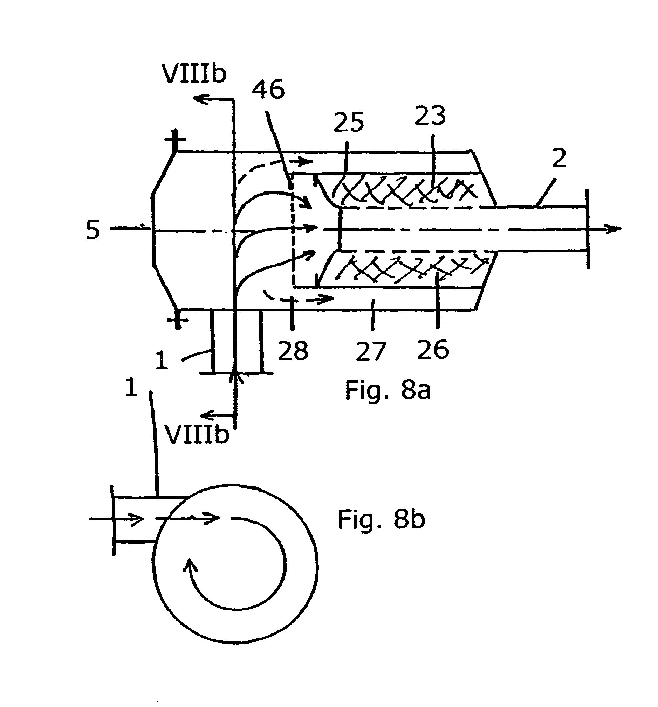

Figs. 8a and 8b show cross-sections of an eighth embodiment of the invention. Here, a per se known type of screen 47 has been fitted onto the cylinder 25 in such a way that all gas flowing through the silencer is forced to pass the screen 47. The screen 47 may e.g. be provided by a perforated plate or by one or more woven, metallic thread networks. The sizes of the openings in the screen 47 will be chosen so that they will not allow any particles greater than a certain size, for instance 0.5 mm, to pass through the screen.

Flow enters the silencer tangentially to the cylindrical shell 4 via inlet pipe 1 so that a rotating flow pattern is set up inside the chamber of the silencer to the left of the assembly 26 extending backwards from silencer outlet into the interior of the silencer. As a result of centrifugal forces acting on particles, this rotational flow will cause bigger particles to move towards the inner surface of the shell, so that such bigger particles, following paths indicated by to dotted curves, will enter the terminated cavity 27 via the annular opening 28, to accumulate within this cavity.

Smaller particles will be subject to less strong centrifugal forces and will therefore be more prone to follow the gas stream which will converge towards the inflow 2 via the screen. Any particle that is sufficiently small not to be captured in the terminated cavity, but which is bigger than the size of the openings of the screen, will be retained on the upstream side of the screen. The left-hand end cap 5 of the silencer is removable (as has been indicated by flanges and bolts), which permits access to the screen for cleaning it from the outside.

Compared to a prior art silencer providing spark-arrestor function by using a screen, the eighth embodiment of the invention has the advantage that, since a significant part of soot is retained within the terminated cavity, there will be less build-up of soot on the screen, causing less increase of pressure drop and/or permitting less frequent cleaning of the screen.

Although all the previous embodiments of the invention shown in figs. 1 to 7, when properly designed, may in many cases provide a satisfactory spark arresting function, insertion of a screen can be motivated to improve the spark-arresting function in various circumstances. Conversely, the eighth embodiment of the invention can be preferable to other types of silencers comprising a screen, due to better acoustical performance, as well as further considerations. The screen shown in fig. 8a may nonetheless be provided in any of the embodiments shown in figs. 1 to 7.

By using small openings of the screen even very small particles can be retained. When spark-arresting relies on a screen only, the designer will tend to not choose too small openings, since that could result in rather rapid build-up of soot on the screen. When the silencer is designed to be relatively small, particles following the gas flow will reside inside the silencer only during a short time interval. This may call for use of a screen with small openings. Another example in which adding a screen can be motivated is when an engine sometimes runs at low rotational speed, in which case gas velocities within the silencer will be small, causing a decrease of centrifugal forces on particles.

A further aspect is that some regulations specifically demand that spark-arresting effect be attained by use of screens with a specific geometry. In such cases, the formal demand can be fulfilled without heavy build-up of soot or other particles onto the screen, by using the last shown embodiment of the invention. A still further aspect is that in the eighth embodiment of the invention, even if a screen should happen to break down mechanically, the silencer will retain its significant spark-arresting function; i.e. the double spark-arresting function represents a non-trivial redundancy.

The drawing shows a preferred embodiment in which a screen has been arranged inside a silencer according to the invention. Since that screen a diameter which is much bigger than both pipes 1,2, the pressure drop across the screen will be relatively small. The effective area of the screen can be further increased by shaping it in various ways apart from a plane shape. Thus, for instance, the screen can be made dome-shaped, which adds the advantage of a greater mechanical stability of the screen.

**Claims**

1. A silencer with

   - an outer shell (4) and provided with one or more conduits (1) for leading gas flow into the silencer and with one or more outlets (2) for leading gas from the silencer, the silencer comprising
   - at least one chamber (12) capable of being trough-flowed by gas entering the chamber (12) and at least one perforated conduit section (1,2) being acoustically in communication with sound absorptive material (13,23) arranged adjacent to the perforated conduit section (1,2),
   - said sound absorptive material (13,23) and conduit section (1,2) together constituting a protrusion extending from part of said outer shell (4), for example from an end cap constituting part of the shell of the silencer, or from an internal member, for example a baffle (9,10) separating at least two through-flowed chambers (12) of the silencer, said silencer **characterised in**
   - said sound absorptive material (13,23) being arranged adjacent to and surrounding at least one terminated cavity (17,27), or said sound absorptive material (13,23) being arranged adjacent to and being surrounded by at least one terminated cavity (17,27), and where a cylindrical shell (15,25) is provided between the sound absorptive material (13,23) and the at least one terminated cavity (17,27),
   - said at least one terminated cavity (17,27) being acoustically in communication with said at least one through-flowed chamber (12), and said acoustic communication being either direct or via a neck section (35,45) provided between the at least one terminated cavity (17,27) and the at least one through-flowed chamber (12), and
   - said at least one terminated cavity (17,27) being arranged adjacent to said sound absorptive material (13,23), thereby constituting one or more resonators acoustically communicating with said at least one through-flowed chamber (12).

2. A silencer according to claim 1, wherein said sound absorptive material (13,23) is contained within a casing (15,25) surrounding said conduit section (1,2), and where said casing (15,25) constitutes a cavity containing sound absorptive material, said casing (15,25) surrounding said conduit section (1,2).

3. A silencer according to claim 2, wherein said at least one terminated cavity (17,27) surrounds said cavity (15,25) containing sound absorptive material.

4. A silencer according to any of the preceding claims, wherein said at least one through-flowed chamber (12) is provided with one or more inlet passages (1) for leading gas to said chamber, and is provided with one or more outlet passages (2) for leading gas from said chamber, and where the sum $a_{in}$ of acoustically representative cross-sectional areas of said inlet passages is fulfilling the condition $a_{in} < A/(3C)$, A being an acoustically representative cross-sectional area of said chamber (12) and C being a constant taking the value of C being at least 1.

5. A silencer according to any of the preceding claims, wherein said at least one through-flowed chamber (12) is provided with one or more inlet passages for leading gas to said chamber, and is provided with one or more outlet passages (2) for leading gas from said chamber, and where the sum $a_{out}$ of acoustically representative cross-sectional areas of said outlet passages is fulfilling the condition $a_{out} < A/(3C)$, A being an acoustically representative cross-sectional area of said chamber (12) and C being a constant taking the value of C being at least 1.

6. A silencer according to any of the preceding claims, wherein said at least one through-flowed chamber (12) is provided with one or more inlet passages (1) for leading gas to said chamber, and is provided with one or more outlet passages (2) for leading gas from said chamber, where the sum $a_{in}$ of acoustically representative cross-sectional areas of said inlet passages, and where the sum $a_{out}$ of acoustically representative cross-sectional areas of said outlet passages, and where the volume V of said chamber is fulfilling the condition

$$V > 6C \left( \sqrt{((a_{in} + a_{out})/2)} \right)^3,$$ A being an acoustically representative cross-sectional area of said chamber (12) and C being a constant taking the value of C being at least 1.

7. A silencer according to any of claims 4-6, wherein said constant C takes the value of C being 2.

8. A silencer according to any of claims 4-6, wherein said constant C takes the value of C being 3.

9. A silencer according to any of the preceding claims, wherein said at least one terminated cavity (17,27) is of a longitudinal shape along a longitudinal extension of said perforated conduit, said cavity thereby acting as a resonator attenuating noise at frequencies corresponding to standing waves in the longitudinal direction of the silencer, the lowest of said frequencies corresponding to a standing quarter-wave, an acoustically effective length, L, of said cavity being essentially equal to, or smaller than, or longer than a length of said protruding sound absorptive material seen along the longitudinal extension of the silencer.

10. A silencer according to any of the preceding claims, wherein the acoustically effective length, L, of said at least one terminated cavity (17,27) is at least 6 times the ratio V/S between a volume, V, of said casing (4), and summed surface areas, S, of side walls of said terminated cavity (17,27).

11. A silencer according to claim 10, wherein the acoustically effective length, L, of said at least one terminated cavity (17,27) is at least 10 times the ratio V/S between the volume, V, of said casing (4), and the summed surface areas, S, of side walls of said terminated cavity (17,27).

12. A silencer according to claim 11, wherein said acoustically effective length, L, of said at least one terminated cavity (17,27) is at least 20 times said ratio V/S between the volume, V, of said casing, and the summed surface areas, S, of side walls of said terminated cavity (17,27).

13. A silencer according to any of the preceding claims, wherein said at least one terminated cavity (17,27) is of annular shape.

14. A silencer according to claim 13, wherein the mean distance, a, between walls in radial direction, integrated over the entire longitudinal and circumferential extension of the acoustically effective length of the terminated cavity (17,27) is at the most a ratio 1/3 of said acoustically effective length, L.

15. A silencer according to claim 14, wherein the mean distance, a, is at the most a ratio 1/5 of said acoustically effective length, L.

16. A silencer according to claim 15, wherein the mean distance, a, is at the most a ratio 1/10 of said acoustically effective length, L.

17. A silencer according to any of claims 9-16, wherein said acoustically effective length, L, of said terminated cavity (17,27) is essentially equal to a length of said protruding sound absorptive material seen along the longitudinal extension of the silencer.

18. A silencer according to any of claims 9-16, wherein said acoustically effective length, L, of said terminated cavity (17,27) is smaller than a length of said protruding sound absorptive material seen along the longitudinal extension of the silencer.

19. A silencer according to any of claims 9-16, wherein said acoustically effective length, L, of said terminated cavity (17,27) is longer than a length of said protruding sound absorptive material seen along the longitudinal extension of the silencer.

20. A silencer according to claim 19, wherein the shape of said at least one terminated cavity (17,27) at least partly constitutes a helical winding around said protrusion.

21. A silencer according to any of claims 9-20, wherein said acoustically effective length, L,, depending on between which parts of the silencer said length is measured, varies between a minimum, Lmin, and a maximum, Lmax, of said length L, and where said length L is being interpreted as a mean value between Lmin and Lmax.

22. A silencer according to claim 1, wherein the at least one neck passage acoustically connecting said at least one terminated cavity (17,27) with said at least one through-flowed chamber (12) is designed for creating a Helmholtz-type resonator.

23. A silencer according to any of the preceding claims, wherein said casing constituting a cavity containing sound absorptive material is of a substantially circular-cylindrical configuration.

24. A silencer according to any of the preceding claims, wherein said at least one piece of protruding sound absorptive material and said at least one essentially surrounding terminated cavity (17,27) is of substantially circular-cylindrical configuration.

25. A silencer according to any of the preceding claims, wherein said perforated conduit is of a substantially circular-cylindrical cross-sectional shape and is capable of leading gas into the at least one through-flowed chamber (12) via a radial diffuser.

26. A silencer according to any of the preceding claims, wherein the entire silencer, except for connections to conduits leading gas to and from the silencer, is of substantially circular-cylindrical configuration.

27. A silencer according to any of the preceding claims, wherein said silencer comprises at least two terminated cavities (17,27), the one terminated cavity having an acoustically effective length L1 and the at least one other terminated cavity having an acoustically effective length L2, and where said length L1 is different from said length L2.

28. A silencer according to any of the preceding claims, wherein at least three pieces of said protruding sound absorptive material are arranged to establish at least three parallel gas flows inside said protruding sound absorptive material, and wherein said at least one terminated cavity (17,27) is constituted by a spacing between said protruding pieces of sound absorptive material.

29. A silencer according to claim 28, wherein more of said terminated cavities (17,27) are formed by sub-dividing said spacing.

30. A silencer according to claim 29, wherein sub-division of said spacing is established by inserting one or more walls between said protruding sound absorptive material.

31. A silencer according to claim 29, wherein sub-division of said spacing is established by inserting one or more walls between said protruding sound absorptive material and another member of the silencer.

32. A silencer according to any of the preceding claims, wherein at least one said resonator, constituted by at least one terminated cavity (17,27) at least partly surrounding protruding sound absorptive material, is tuned so as to target one or more peak frequencies of an un-attenuated noise spectrum to be attenuated by said silencer.

33. A silencer according to any of the preceding claims, wherein said silencer is designed so as to provide means for spark-arresting, said means comprising said at least one terminated cavity (17,27) capable of collecting particles separated from the gas flow as the spark-arresting function.

34. A silencer according to claim 33, wherein said spark-arrestor is shaped as a radial diffuser.

35. A silencer according to claim 34, wherein said radial diffuser is provided with ribs capable of guiding flow towards the periphery of said diffuser, said ribs being of such a shape that gas flow leaves said diffuser with a tangential flow direction component, thus acting as a swirl generator.

36. A silencer according to claim 33, wherein at least one of the following flow motions: radial outward flow motion, radial inward flow motion and swirling flow motion is enforced upon the gas flow passing through the silencer, thereby promoting particles contained in the gas flow to be collected in said at least one terminated cavity (17,27).

37. A silencer according to any of the preceding claims, wherein gas flow, when passing through said silencer, passes at least one screen (47) provided with openings, the size of said openings being selected so that any particles that are of a size greater than the size of the openings will be retained, either on the upstream side of a said screen or otherwise within the silencer.

38. A silencer according to claim 37, wherein at least one of said at least one screen are provided onto a number of protrusions, such that gas leaving one or more chambers of the silencer will pass through said at least one screen prior to entering said number of protrusions.

39. Use of a silencer according to any of the preceding claims, **characterised in** said use being for silencing acoustical emission from exhaust gases from a combustion engine.

40. Use according to claim 39, **characterised in** said use being for silencing acoustical emission from exhaust gases from a diesel engine.

**Patentansprüche**

1. Schalldämpfer mit

   - einer Außenhülle (4) und versehen mit einem oder mehreren Rohren (1) zum Leiten von Gasstrom in den Schalldämpfer und mit einem oder mehreren Auslässen (2) zum Leiten von Gas vom Schalldämpfer, wobei der Schalldämpfer umfasst
   - mindestens eine Kammer (12), die von einem in die Kammer (12) eintretenden Gas durchströmt werden kann, und mindestens einen perforierten Rohrabschnitt (1,2), der akustisch in Verbindung mit einem schallabsorbierenden Material (13,23) ist, welches neben dem perforierten Rohrabschnitt (1,2) angeordnet ist,
   - wobei das schallabsorbierende Material (13,23) und der Rohrabschnitt (1,2) zusammen einen Vorsprung bilden, der sich von einem Teil der Außenhülle (4) erstreckt, z. B. von einer Endkappe, die einen Teil der Hülle des Schalldämpfers bildet, oder von einem inneren Element, z. B. einem Leitblech (9,10), das mindestens zwei durchströmte Kammern (12) des Schalldämpfers trennt,

   wobei der Schalldämpfer **dadurch gekennzeichnet ist, dass**

   - das schallabsorbierende Material (13,23) neben mindestens einem abgeschlossenen Hohlraum (17,27) angeordnet ist und diesen umgibt oder das schallabsorbierende Material (13,23) neben mindestens einem abgeschlossenen Hohlraum (17,27) angeordnet und von diesem umgeben ist, und wobei eine zylindrische Hülle (15,25) zwischen dem schallabsorbierenden Material (13,23) und dem mindestens einen nicht durchströmten Hohlraum (17,27) vorgesehen ist,
   - der mindestens eine abgeschlossene Hohlraum (17,27) akustisch in Verbindung mit der mindestens einen durchströmten Kammer (12) ist und die akustische Verbindung entweder unmittelbar oder über einen Halsabschnitt (35,45) erfolgt, der zwischen dem mindestens einen abgeschlossenen Hohlraum (17,27) und der mindestens einen durchströmten Kammer (12) vorgesehen ist, und
   - der mindestens eine abgeschlossene Hohlraum (17,27) neben dem schallabsorbierenden Material (13,23) angeordnet ist, wodurch ein oder mehrere Resonatoren gebildet werden, die akustisch mit der mindestens einen durchströmten Kammer (12) in Verbindung sind.

2. Schalldämpfer nach Anspruch 1, wobei das schallabsorbierende Material (13,23) in einem Gehäuse (15,25) enthalten ist, das den Rohrabschnitt (1,2) umgibt, und wobei das Gehäuse (15,25) einen Hohlraum bildet, der das den Rohrabschnitt (1,2) umgebende schallabsorbierende Material enthält.

3. Schalldämpfer nach Anspruch 2, wobei der mindestens eine abgeschlossene Hohlraum (17,27) den schallabsorbierendes Material enthaltenden Hohlraum (15,25) umgibt.

4. Schalldämpfer nach einem der vorhergehenden Ansprüche, wobei die mindestens eine durchströmte Kammer (12) mit einem oder mehreren Einlassdurchgängen (1) zum Leiten von Gas in die Kammer versehen ist und mit einem oder mehreren Auslassdurchgängen (2) zum Leiten von Gas aus der Kammer versehen ist und wobei die Summe $a_{in}$ akustisch repräsentativer Querschnittsflächen der Einlassdurchgänge die Bedingung $a_{in} < A/(3C)$ erfüllt, wobei A eine akustisch repräsentative Querschnittsfläche der Kammer (12) ist und C eine Konstante ist, wobei C einen Wert von mindestens 1 annimmt.

5. Schalldämpfer nach einem der vorhergehenden Ansprüche, wobei die mindestens eine durchströmte Kammer (12) mit einem oder mehreren Einlassdurchgängen (1) zum Leiten von Gas in die Kammer versehen ist und mit einem oder mehreren Auslassdurchgängen (2) zum Leiten von Gas aus der Kammer versehen ist und wobei die Summe $a_{out}$ akustisch repräsentativer Querschnittsflächen der Auslassdurchgänge die Bedingung $a_{out} < A/(3C)$ erfüllt, wobei A eine akustisch repräsentative Querschnittsfläche der Kammer (12) ist und C eine Konstante ist, wobei C einen Wert von mindestens 1 annimmt.

6. Schalldämpfer nach einem der vorhergehenden Ansprüche, wobei die mindestens eine durchströmte Kammer (12) mit einem oder mehreren Einlassdurchgängen (1) zum Leiten von Gas in die Kammer versehen ist und mit einem oder mehreren Auslassdurchgängen (2) zum Leiten von Gas aus der Kammer versehen ist, wobei die Summe $a_{in}$ akustisch repräsentativer Querschnittsflächen der Einlassdurchgänge und wobei die Summe $a_{out}$ akustisch repräsentativer Querschnittsflächen der Auslassdurchgänge und

wobei das Volumen V der Kammer die Bedingung

$$V > 6C \left( \sqrt{((a_{in} + a_{out})/2)} \right)^3$$ erfüllen,

wobei A eine akustisch repräsentative Querschnittsfläche der Kammer (12) ist und C eine Konstante ist, wobei C einen Wert von mindestens 1 annimmt.

7. Schalldämpfer nach einem der Ansprüche 4-6, wobei die Konstante C den Wert 2 annimmt.

8. Schalldämpfer nach einem der Ansprüche 4-6, wobei die Konstante C den Wert 3 annimmt.

9. Schalldämpfer nach einem der vorhergehenden Ansprüche, wobei der mindestens eine abgeschlossene Hohlraum (17,27) entlang einer Längsausdehnung des perforierten Rohrs eine längliche Form aufweist, wobei der Hohlraum als ein Resonator wirkt, der Geräusche mit Frequenzen dämpft, die stehenden Wellen in der Längsrichtung des Schalldämpfers entsprechen, wobei die niedrigste der Frequenzen einer stehenden Viertelwelle entspricht, wobei eine akustisch wirksame Länge L des Hohlraums im Wesentlichen gleich einer oder kleiner als oder länger als eine Länge des vorstehenden schallabsorbierenden Materials ist, das entlang der Längsausdehnung des Schalldämpfers sichtbar ist.

10. Schalldämpfer nach einem der vorhergehenden Ansprüche, wobei die akustisch wirksame Länge L des mindestens einen abgeschlossenen Hohlraums (17,27) mindestens das Sechsfache des Verhältnisses V/S eines Volumens V des Gehäuses (4) und summierter Oberflächen S der Seitenwände des abgeschlossenen Hohlraums (17,27) beträgt.

11. Schalldämpfer nach Anspruch 10, wobei die akustisch wirksame Länge L des mindestens einen abgeschlossenen Hohlraums (17,27) mindestens das Zehnfache des Verhältnisses V/S des Volumens V des Gehäuses (4) und der summierter Oberflächen S der Seitenwände des abgeschlossenen Hohlraums (17,27) beträgt.

12. Schalldämpfer nach Anspruch 11, wobei die akustisch wirksame Länge L des mindestens einen abgeschlossenen Hohlraums (17,27) mindestens das Zwanzigfache des Verhältnisses V/S des Volumens V des Gehäuses und der summierter Oberflächen S der Seitenwände des abgeschlossenen Hohlraums (17,27) beträgt.

13. Schalldämpfer nach einem der vorhergehenden Ansprüche, wobei der mindestens eine abgeschlossene Hohlraum (17,27) eine ringförmige Form aufweist.

14. Schalldämpfer nach Anspruch 13, wobei der mittlere Abstand a zwischen Wänden in radialer Richtung über die gesamte Längs- und Umfangsausdehnung der akustisch wirksamen Länge des abgeschlossenen Hohlraums (17,27) integriert höchstens ein Verhältnis von 1/3 der akustisch wirksamen Länge L beträgt.

15. Schalldämpfer nach Anspruch 14, wobei der mittlere Abstand a höchstens ein Verhältnis von 1/5 der akustisch wirksamen Länge L beträgt.

16. Schalldämpfer nach Anspruch 15, wobei der mittlere Abstand a höchstens ein Verhältnis von 1/10 der akustisch wirksamen Länge L beträgt.

17. Schalldämpfer nach einem der Ansprüche 9-16, wobei die akustisch wirksame Länge L des abgeschlossenen Hohlraums (17,27) im Wesentlichen gleich einer Länge des vorstehenden schallabsorbierenden Materials ist, das entlang der Längsausdehnung des Schalldämpfers sichtbar ist.

18. Schalldämpfer nach einem der Ansprüche 9-16, wobei die akustisch wirksame Länge L des abgeschlossenen Hohlraums (17,27) kleiner als eine Länge des vorstehenden schallabsorbierenden Materials ist, das entlang der Längsausdehnung des Schalldämpfers sichtbar ist.

19. Schalldämpfer nach einem der Ansprüche 9-16, wobei die akustisch wirksame Länge L des abgeschlossenen Hohlraums (17,27) länger als eine Länge des vorstehenden schallabsorbierenden Materials ist, das entlang der Längsausdehnung des Schalldämpfers sichtbar ist.

20. Schalldämpfer nach Anspruch 19, wobei die Form des mindestens einen abgeschlossenen Hohlraums (17,27) mindestens teilweise eine spiralförmige Windung um den Vorsprung bildet.

21. Schalldämpfer nach einem der Ansprüche 9-20, wobei die akustisch wirksame Länge L in Abhängigkeit davon, zwischen welchen Stellen des Schalldämpfers die Länge gemessen wird, zwischen einem Mindestwert Lmin und einem Höchstwert Lmax der Länge L schwankt und wobei die Länge L als ein Mittelwert zwischen Lmin und Lmax ausgelegt wird.

22. Schalldämpfer nach Anspruch 1, wobei der mindestens eine Halsdurchgang, der den mindestens einen abgeschlossenen Hohlraum (17,27) mit der mindestens einen durchströmten Kammer (12) verbindet, derart ausgelegt ist, dass ein Resonator vom Helmholtz-Typ ausgebildet wird.

23. Schalldämpfer nach einem der vorhergehenden Ansprüche, wobei das einen Hohlraum bildende Gehäuse, das ein schallabsorbierendes Material enthält, von im Wesentlichen kreisförmig-zylindrischer Konfiguration ist.

24. Schalldämpfer nach einem der vorhergehenden Ansprüche, wobei das mindestens eine Stück vorstehendes schallabsorbierendes Material und der mindestens eine im Wesentlichen umgebende abgeschlossene Hohlraum (17,27) von im Wesentlichen kreisförmig-zylindrischer Konfiguration sind.

25. Schalldämpfer nach einem der vorhergehenden Ansprüche, wobei das perforierte Rohr eine im Wesentlichen kreisförmig-zylindrische Querschnittsflächenform aufweist und Gas über einen radialen Diffusor in die mindestens eine durchströmte Kammer (12) leiten kann.

26. Schalldämpfer nach einem der vorhergehenden Ansprüche, wobei der gesamte Schalldämpfer mit Ausnahme von Verbindungen zu Rohren zum Leiten von Gas in den und aus dem Schalldämpfer von in Wesentlichem kreisförmig-zylindrischer Konfiguration ist.

27. Schalldämpfer nach einem der vorhergehenden Ansprüche, wobei der Schalldämpfer mindestens zwei abgeschlossene Hohlräume (17,27) umfasst, wobei der eine abgeschlossene Hohlraum eine akustisch wirksame Länge L1 aufweist und der mindestens eine andere abgeschlossene Hohlraum eine akustisch wirksame Länge L2 aufweist und wobei sich die Länge L1 von der Länge L2 unterscheidet.

28. Schalldämpfer nach einem der vorhergehenden Ansprüche, wobei mindestens drei Stücke des vorstehenden schallabsorbierenden Materials derart angeordnet sind, dass mindestens drei parallele Gasströme in dem vorstehenden schallabsorbierenden Material ausgebildet werden, und wobei der mindestens eine abgeschlossene Hohlraum (17,27) durch einen Zwischenraum zwischen den vorstehenden Stücken des schallabsorbierenden Materials gebildet wird.

29. Schalldämpfer nach Anspruch 28, wobei durch Unterteilen des Zwischenraums mehrere solcher abgeschlossener Hohlräume (17,27) gebildet werden.

30. Schalldämpfer nach Anspruch 29, wobei die Unterteilung des Zwischenraums durch Einsetzen einer oder mehrerer Wände zwischen dem vorstehenden schallabsorbierenden Material ausgebildet wird.

31. Schalldämpfer nach Anspruch 29, wobei die Unterteilung des Zwischenraums durch Einsetzen einer oder mehrerer Wände zwischen dem vorstehenden schallabsorbierenden Material und einem anderen Element des Schalldämpfers ausgebildet wird.

32. Schalldämpfer nach einem der vorhergehenden Ansprüche, wobei mindestens ein Resonator, der durch mindestens einen das schallabsorbierende Material mindestens teilweise umgebenden abgeschlossenen Hohlraum (17,27) gebildet wird auf eine oder mehrere Spitzenfrequenzen eines nicht gedämpften Geräuschspektrums eingestellt ist, das mit dem Schalldämpfer gedämpft werden soll.

33. Schalldämpfer nach einem der vorhergehenden Ansprüche, wobei der Schalldämpfer derart ausgelegt ist, dass Mittel zum Funkenfangen vorgesehen sind, wobei die Mittel mindestens einen abgeschlossenen Hohlraum (17,27) umfassen, in dem Teilchen gesammelt werden können, die im Rahmen der Funkenfangfunktion aus dem Gasstrom abgetrennt wurden.

34. Schalldämpfer nach Anspruch 33, wobei der Funkenfänger als radialer Diffusor geformt ist.

35. Schalldämpfer nach Anspruch 34, wobei der radiale Diffusor mit Rippen versehen ist, die Strom zur Peripherie des Diffusors führen können, wobei die Rippen eine derartige Form aufweisen, dass Gasstrom den Diffusor mit einer tangentialen Strömungsrichtungskomponente verlässt und somit als ein Wirbelerzeuger wirkt.

36. Schalldämpfer nach Anspruch 33, wobei dem durch den Schalldämpfer passierenden Gasstrom mindestens eine der folgenden Strömungsbewegungen: radiale Strömungsbewegung nach außen, radiale Strömungsbewegung nach innen und wirbelnde Strömungsbewegung aufgezwungen wird, wodurch gefördert wird, dass im Gasstrom enthaltene Teilchen in dem mindestens einen abgeschlossenen Hohlraum (17,27) gesammelt werden.

37. Schalldämpfer nach einem der vorhergehenden Ansprüche, wobei Gasstrom beim Passieren durch den Schalldämpfer mindestens ein mit Öffnungen versehenes Sieb (47) passiert, wobei die Größe der Öffnungen derart ausgewählt ist, dass jedes Teilchen mit einer Größe von mehr als der Größe der Öffnungen zurückgehalten wird, entweder auf der dem Sieb vorgeordneten Seite oder ansonsten innerhalb des Schalldämpfers.

38. Schalldämpfer nach Anspruch 37, wobei mindestens eines des mindestens einen Siebs auf einer Anzahl an Vorsprüngen vorgesehen ist, sodass aus einer oder mehreren Kammern des Schalldämpfers austretendes Gas vor dem Eintreten in die Anzahl an Vorsprüngen durch das mindestens eine Sieb passiert.

39. Verwendung eines Schalldämpfers nach einem der vorhergehenden Ansprüche, **dadurch gekennzeichnet, dass** die Verwendung das Dämpfen akustischer Emissionen von Abgasen einer Verbrennungsmaschine ist.

40. Verwendung nach Anspruch 39, **dadurch gekennzeichnet, dass** die Verwendung das Dämpfen akustischer Emissionen von Abgasen eines Dieselmotors ist.

**Revendications**

1. Silencieux avec

   - une coque extérieure (4) et muni d'un ou plusieurs conduits (1) pour mener un écoulement gazeux dans le silencieux et d'une ou plusieurs sorties (2) pour mener le gaz hors du silencieux, le silencieux comprenant
   - au moins une chambre (12) pouvant être traversée par le gaz pénétrant dans la chambre (12) et au moins une section de conduit perforé (1,2) en communication acoustique avec un matériau insonorisant (13,23) agencé adjacent à la section de conduit perforé (1,2),
   - ledit matériau insonorisant (13,23) et ladite section de conduit (1,2) constituant ensemble une saillie s'étendant depuis une partie de ladite coque extérieure (4), par exemple depuis un embout constituant une partie de la coque du silencieux, ou depuis un élément interne, par exemple une chicane (9,10) séparant au moins deux chambres traversées (12) du silencieux, ledit silencieux étant **caractérisé en ce que**
   - ledit matériau insonorisant (13,23) est agencé adjacent à et entoure au moins une cavité terminée (17,27), ou ledit matériau insonorisant (13,23) est agencé adjacent à et est entouré par au moins une cavité terminée (17,27), et où une coque cylindrique (15,25) est prévue entre le matériau insonorisant (13,23) et la au moins une cavité terminée (17,27),
   - ladite au moins une cavité terminée (17,27) est en communication acoustique avec ladite au moins une chambre traversée (12), et ladite communication acoustique est soit directe, soit par l'intermédiaire d'une section de goulot (35,45) prévue entre la au moins une cavité terminée (17,27) et la au moins une chambre traversée (12), et
   - ladite au moins une cavité terminée (17,27) est agencée adjacente audit matériau insonorisant (13,23), constituant ainsi un ou plusieurs résonateurs communiquant acoustiquement avec ladite au moins une chambre traversée (12).

2. Silencieux selon la revendication 1, dans lequel ledit matériau insonorisant (13,23) est contenu dans un carter (15,25) entourant ladite section de conduit (1,2), et où ledit carter (15,25) constitue une cavité contenant le matériau insonorisant, ledit carter (15,25) entourant ladite section de conduit (1,2).

3. Silencieux selon la revendication 2, dans lequel ladite au moins une cavité terminée (17,27) entoure ladite cavité (15,25) contenant le matériau insonorisant.

4. Silencieux selon l'une quelconque des revendications précédentes, dans lequel ladite au moins une chambre traversée (12) est munie d'un ou plusieurs passages d'entrée (1) pour mener le gaz dans ladite chambre, et est munie d'un ou plusieurs passages de sortie (2) pour mener le gaz hors de ladite chambre, et où la somme $a_{in}$ des superficies en coupe acoustiquement représentatives desdits passages d'entrée remplit la condition $a_{in} < A/(3C)$, A étant une superficie en coupe acoustiquement représentative de ladite chambre (12) et C étant une constante prenant la valeur d'au moins 1.

5. Silencieux selon l'une quelconque des revendications précédentes, dans lequel ladite au moins une chambre traversée (12) est munie d'un ou plusieurs passages d'entrée pour mener le gaz dans ladite chambre, et est munie d'un ou plusieurs passages de sortie (2) pour mener le gaz hors de ladite chambre, et où la somme $a_{out}$ des superficies en coupe acoustiquement représentatives desdits passages de sortie remplit la condition $a_{out} < A/(3C)$, A étant une superficie en coupe acoustiquement représentative de ladite chambre (12) et C étant une constante prenant la valeur d'au moins 1.

6. Silencieux selon l'une quelconque des revendications précédentes, dans lequel ladite au moins une chambre traversée (12) est munie d'un ou plusieurs passages d'entrée (1) pour mener le gaz dans ladite chambre, et est munie d'un ou plusieurs passages de sortie (2) pour mener le gaz hors de ladite cham-

bre, où la somme $a_{in}$ des superficies en coupe acoustiquement représentatives desdits passages d'entrée, et où la somme $a_{out}$ des superficies en coupe acoustiquement représentatives desdits passages de sortie, et où le volume V de ladite chambre remplissent la condition

$$V > 6C \left(\sqrt{((a_{in} + a_{out})/2)}\right)^3,$$ A étant une superficie en coupe acoustiquement représentative de ladite chambre (12) et C étant une constante prenant la valeur d'au moins 1.

7. Silencieux selon l'une quelconque des revendications 4 à 6, dans lequel ladite constante C prend la valeur de 2.

8. Silencieux selon l'une quelconque des revendications 4 à 6, dans lequel ladite constante C prend la valeur de 3.

9. Silencieux selon l'une quelconque des revendications précédentes, dans lequel ladite au moins une cavité terminée (17,27) est de forme longitudinale le long d'une extension longitudinale dudit conduit perforé, ladite cavité agissant ainsi comme résonateur atténuant le bruit à des fréquences correspondant aux ondes stationnaires dans la direction longitudinale du silencieux, la plus basse desdites fréquences correspondant à un quart d'onde stationnaire, une longueur acoustiquement efficace, L, de ladite cavité étant essentiellement égale, inférieure ou supérieure à une longueur dudit matériau insonorisant saillant vu le long de l'extension longitudinale du silencieux.

10. Silencieux selon l'une quelconque des revendications précédentes, dans lequel la longueur acoustiquement efficace, L, de ladite au moins une cavité terminée (17,27) est au moins 6 fois le rapport V/S entre un volume, V, dudit carter (4), et les surfaces additionnées, S, des parois latérales de ladite cavité terminée (17,27).

11. Silencieux selon la revendication 10, dans lequel la longueur acoustiquement efficace, L, de ladite au moins une cavité terminée (17,27) est au moins 10 fois le rapport V/S entre le volume, V, dudit carter (4), et les surfaces additionnées, S, des parois latérales de ladite cavité terminée (17,27).

12. Silencieux selon la revendication 11, dans lequel ladite longueur acoustiquement efficace, L, de ladite au moins une cavité terminée (17,27) est au moins 20 fois ledit rapport V/S entre le volume, V, dudit carter, et les surfaces additionnées, S, des parois latérales de ladite cavité terminée (17,27).

13. Silencieux selon l'une quelconque des revendications précédentes, dans lequel ladite au moins une cavité terminée (17,27) est de forme annulaire.

14. Silencieux selon la revendication 13, dans lequel la distance moyenne, a, entre les parois dans la direction radiale, intégrées sur l'extension longitudinale et circonférentielle entière de la longueur acoustiquement efficace de la cavité terminée (17,27) est au plus un rapport de 1/3 de ladite longueur acoustiquement efficace, L.

15. Silencieux selon la revendication 14, dans lequel la distance moyenne, a, est au plus un rapport de 1/5 de ladite longueur acoustiquement efficace, L.

16. Silencieux selon la revendication 15, dans lequel la distance moyenne, a, est au plus un rapport de 1/10 de ladite longueur acoustiquement efficace, L.

17. Silencieux selon l'une quelconque des revendications 9 à 16, dans lequel ladite longueur acoustiquement efficace, L, de ladite cavité terminée (17,27) est essentiellement égale à une longueur dudit matériau insonorisant saillant vu le long de l'extension longitudinale du silencieux.

18. Silencieux selon l'une quelconque des revendications 9 à 16, dans lequel ladite longueur acoustiquement efficace, L, de ladite cavité terminée (17,27) est inférieure à une longueur dudit matériau insonorisant saillant vu le long de l'extension longitudinale du silencieux.

19. Silencieux selon l'une quelconque des revendications 9 à 16, dans lequel ladite longueur acoustiquement efficace, L, de ladite cavité terminée (17,27) est supérieure à une longueur dudit matériau insonorisant saillant vu le long de l'extension longitudinale du silencieux.

20. Silencieux selon la revendication 19, dans lequel la forme de ladite au moins une cavité terminée (17,27) constitue au moins partiellement un enroulement hélicoïdal autour de ladite saillie.

21. Silencieux selon l'une quelconque des revendications 9 à 20, dans lequel ladite longueur acoustiquement efficace, L, selon entre quelles parties du silencieux ladite longueur est mesurée, varie entre un minimum, Lmin, et un maximum, Lmax, de ladite longueur L, et où ladite longueur L est interprétée comme valeur moyenne entre Lmin et Lmax.

22. Silencieux selon la revendication 1, dans lequel au moins un passage de goulot reliant acoustiquement ladite au moins une cavité terminée (17,27) à ladite au moins une chambre traversée (12) est conçu pour créer un résonateur du type de Helmholtz.

23. Silencieux selon l'une quelconque des revendications précédentes, dans lequel ledit carter constituant la cavité contenant un matériau insonorisant est de configuration sensiblement circulaire-cylindrique.

24. Silencieux selon l'une quelconque des revendications précédentes, dans lequel ledit au moins un morceau de matériau insonorisant saillant et ladite au moins une cavité terminée essentiellement enveloppante (17,27) sont de configuration sensiblement circulaire-cylindrique.

25. Silencieux selon l'une quelconque des revendications précédentes, dans lequel ledit conduit perforé a une forme en coupe sensiblement circulaire-cylindrique et peut mener le gaz dans la au moins une chambre traversée (12) par l'intermédiaire d'un diffuseur radial.

26. Silencieux selon l'une quelconque des revendications précédentes, dans lequel le silencieux entier, à l'exception des connexions aux conduits menant le gaz dans et hors du silencieux, est de configuration sensiblement circulaire-cylindrique.

27. Silencieux selon l'une quelconque des revendications précédentes, dans lequel ledit silencieux comprend au moins deux cavités terminées (17,27), l'une des cavités terminées ayant une longueur acoustiquement efficace L1 et la au moins une autre cavité terminée ayant une longueur acoustiquement efficace L2, et où ladite longueur L1 est différente de ladite longueur L2.

28. Silencieux selon l'une quelconque des revendications précédentes, dans lequel au moins trois morceaux dudit matériau insonorisant saillant sont agencés pour établir au moins trois écoulements gazeux parallèles à l'intérieur dudit matériau insonorisant saillant, et dans lequel ladite au moins une cavité terminée (17,27) est constituée par un espacement entre lesdits morceaux saillants de matériau insonorisant.

29. Silencieux selon la revendication 28, dans lequel un plus grand nombre desdites cavités terminées (17,27) sont formées en subdivisant ledit espacement.

30. Silencieux selon la revendication 29, dans lequel la subdivision dudit espacement est établie en insérant une ou plusieurs parois entre ledit matériau insonorisant saillant.

31. Silencieux selon la revendication 29, dans lequel la subdivision dudit espacement est établie en insérant une ou plusieurs parois entre ledit matériau insonorisant saillant et un autre élément du silencieux.

32. Silencieux selon l'une quelconque des revendications précédentes, dans lequel au moins un dit résonateur, constitué par au moins une cavité terminée (17,27) entourant au moins partiellement le matériau insonorisant saillant, est accordé de façon à cibler une ou plusieurs fréquences de crête d'un spectre de bruit non atténué devant être atténué par ledit silencieux.

33. Silencieux selon l'une quelconque des revendications précédentes, dans lequel ledit silencieux est conçu de façon à fournir un moyen pare-étincelles, ledit moyen comprenant ladite au moins une cavité terminée (17,27) capable de collecter les particules séparées de l'écoulement gazeux comme fonction pare-étincelles.

34. Silencieux selon la revendication 33, dans lequel ledit pare-étincelles est formé en tant que diffuseur radial.

35. Silencieux selon la revendication 34, dans lequel ledit diffuseur radial est muni de nervures capables de guider l'écoulement vers la périphérie dudit diffuseur, lesdites nervures ayant une forme telle que l'écoulement gazeux quitte ledit diffuseur avec une composante de direction d'écoulement tangentiel, agissant ainsi comme un générateur de tourbillon.

36. Silencieux selon la revendication 33, dans lequel au moins un des mouvements d'écoulement suivants : mouvement d'écoulement radial vers l'extérieur, mouvement d'écoulement radial vers l'intérieur et mouvement d'écoulement tourbillonnaire est mis en oeuvre lorsque l'écoulement gazeux passe à travers le silencieux, favorisant ainsi la collecte des particules contenues dans l'écoulement gazeux dans ladite au moins une cavité terminée (17,27).

37. Silencieux selon l'une quelconque des revendications précédentes, dans lequel l'écoulement gazeux lorsqu'il passe à travers ledit silencieux traverse au moins un écran (47) muni d'ouvertures, la taille desdites ouvertures étant sélectionnée de façon à ce que toutes les particules qui ont une taille supérieure à la taille des ouvertures soient retenues, soit sur le côté amont dudit écran, ou sinon à l'intérieur du silencieux.

38. Silencieux selon la revendication 37, dans lequel au moins un dit écran est prévu sur un certain nombre de saillies, de sorte que le gaz quittant une ou plusieurs chambres du silencieux passera à travers ledit au moins un écran avant de pénétrer dans ledit certain nombre de saillies.

**39.** Utilisation d'un silencieux selon l'une quelconque de revendications précédentes, **caractérisée en ce que** ladite utilisation est destinée à éliminer les émissions acoustiques des gaz d'échappement d'un moteur à combustion.

**40.** Utilisation selon la revendication 39, **caractérisée en ce que** ladite utilisation est destinée à éliminer les émissions acoustiques des gaz d'échappement d'un moteur diesel.

Fig. 1

Fig. 2

Fig. 3a

Fig. 3b

Fig. 4

Fig. 5

Fig. 6a

Fig. 6b

17     35     VIIb     45     23

27

44     13     VIIb   12     45

Fig. 7a

35

13

44     Fig. 7b

VIIIb

46

25    23

2

5

1

28    27    26

Fig. 8a

VIIIb

1

1

Fig. 8b

**EP 1 781 907 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9950539 A
- WO 0153665 A
- EP 0127550 A
- GB 732936 A